# EUROPÄISCHE PATENTANMELDUNG

(11) **EP 2 192 460 A1**
(43) Veröffentlichungstag der Anmeldung: **02.06.2010**
(21) Anmeldenummer: 08020547.9
(22) Anmeldetag: 26.11.2008
(51) Int. Cl.: G05B 19/05, G05B 19/418

(54) **Verfahren zum Betrieb eines Automatisierungsgeräts, nach dem Verfahren arbeitendes Automatisierungsgerät und Computer-programm zur Implementierung des Verfahrens**

(71) Anmelder: Siemens Aktiengesellschaft, 80333 München (DE)
(72) Erfinder: Rock, Michael, 76829 Landau (DE)

(57) **Zusammenfassung**

Es werden ein Verfahren zum Betrieb eines Automatisierungsgeräts und ein nach dem Verfahren arbeitendes Automatisierungsgerät mit einem Speicher (26), in dem als Automatisierungslösung zur Steuerung und/oder Überwachung eines technischen Prozesses (24) ein Steuerungsprogramm (32) gespeichert ist, angegeben, wobei das Automatisierungsgerät (12) zur Steuerung des technischen Prozesses (24) mit anderen, entfernten Automatisierungsgeräten (14-20) kommunikativ verbunden ist und wobei über die kommunikative Verbindung ein Zugriff des Automatisierungsgeräts (12) auf einen Speicher (28) entfernter Automatisierungsgeräte (14-20) möglich ist, wobei Vorkommnisse auf dem Automatisierungsgerät (12-20) nach vorgegebenen oder vorgebbaren Kriterien erfasst werden und wobei von erfassten Vorkommnissen benötigte Ressourcen, insbesondere in einem entfernten Speicher (28) vorgehaltene Daten (34), im Speicher (26) des Automatisierungsgeräts (12-20) vorgehalten werden.

## Beschreibung

Die Erfindung betrifft ein Verfahren zum Betrieb eines Automatisierungsgeräts mit einem Speicher, in dem als Automatisierungslösung zur Steuerung und/oder Überwachung eines technischen Prozesses ein Steuerungsprogramm gespeichert ist. Das Automatisierungsgerät ist zur Steuerung des technischen Prozesses mit anderen, entfernten Automatisierungsgeräten kommunikativ verbunden, so dass die Gesamtheit der Automatisierungsgeräte, z. B. Prozessrechner, speicherprogrammierbare Steuerungen, dezentrale Peripheriegeräte und dergleichen, ein Automatisierungssystem bildet. Über die kommunikative Verbindung ist ein Zugriff des Automatisierungsgeräts auf einen Speicher anderer Automatisierungsgeräte möglich, wobei diese anderen Automatisierungsgeräte und ein davon jeweils umfasster Speicher im Folgenden zur Unterscheidung als entfernte Automatisierungsgeräte bzw. entfernte Speicher bezeichnet werden.

Derartige Automatisierungsgeräte sind an sich bekannt. Wie bereits in der DE 197 40 550 erwähnt ist, sind aus dem Siemens-Katalog ST 70, Ausgabe 1996, Kapitel 3, 4 und 8 als Automatisierungsgeräte eine speicherprogrammierbare Steuerung sowie ein Programmiergerät zum Erstellen eines Steuerprogramms für eine derartige speicherprogrammierbare Steuerung bekannt. Wesentliche Bestandteile dieser speicherprogrammierbaren Steuerung sind Baugruppen für zentrale Aufgaben (CPU-Einheiten) sowie Signal-, Funktions- und Kommunikationsbaugruppen. Die CPU-Einheit der speicherprogrammierbaren Steuerung arbeitet während des Steuerbetriebs zyklisch ein Anwender- oder Steuerprogramm ab, welches ein Programmierer mit einem mit einem Software-Werkzeug versehenen Programmiergerät erstellt und welches zur Lösung einer Automatisierungsaufgabe (Automatisierungslösung) vorgesehen ist. Während der zyklischen Bearbeitung liest die CPU-Einheit zunächst die Signalzustände an allen physikalischen Prozesseingängen ab und bildet ein Prozessabbild der Eingänge. Das Steuerungsprogramm wird weiter unter Einbeziehung interner Zähler, Merker und Zeiten schrittweise abgearbeitet und schließlich hinterlegt die CPU-Einheit die errechneten Signalzustände im Prozessabbild der Prozessausgänge, von welchem diese Signalzustände zu den physikalischen Prozessausgängen gelangen. Ein Steuerungsprogramm umfasst gewöhnlich Software-Funktionsbausteine, die einen Betrieb der Signal- und/oder Funktions-und/oder Kommunikationsbaugruppen ermöglichen.

Allgemein ist der Begriff "Automatisierungsgerät" für den Gesamtzusammenhang dieser Beschreibung so auszulegen, dass er sämtliche Geräte, Einrichtungen oder Systeme umfasst, also neben z. B. Steuerungen, wie speicherprogrammierbaren Steuerungen, Prozessrechnern, (Industrie-)Computern und dergleichen, auch Antriebssteuerungen, Frequenzumrichter und Ähnliches, wie sie zur Steuerung, Regelung und/oder Überwachung technischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Die Erfindung kann grundsätzlich mit jedem Gerät verwirklicht werden, welches der obigen Definition unterfällt. Nachdem ein Automatisierungssystem üblicherweise mehrere derartige Automatisierungsgeräte umfasst, wird für die Erfindung zumindest eines dieser Geräte ausgewählt.

Noch nicht ganz optimal bei bisher bekannten Automatisierungsgeräten ist, dass bei deren Zusammenfassung in einem Automatisierungssystem und der dabei verwendeten kommunikativen Verbindung Daten einzelner Automatisierungsgeräte jeweils nur lokal vorliegen, so dass, wenn eines der anderen Automatisierungsgeräte diese Daten benötigt, ein vorheriger Transfer erforderlich ist. Dies benötigt Zeit und mitunter wird die benötigte Zeit, also die Dauer, bis die Daten tatsächlich zur Verfügung stehen (Zeitversatz), als ungünstig empfunden.

Eine Aufgabe der Erfindung besteht entsprechend darin, ein Verfahren anzugeben, mit dem diese Nachteile vermieden oder zumindest deren Auswirkungen reduziert werden.

Erfindungsgemäß wird diese Aufgabe gelöst mit den Merkmalen des Anspruchs 1. Dazu ist bei einem Verfahren zum Betrieb eines Automatisierungsgeräts der eingangs genannten Art, das zur Steuerung eines technischen Prozesses mit entfernten Automatisierungsgeräten kommunikativ verbunden ist und über die kommunikative Verbindung einen Zugriff auf entfernte Speicher entfernter Automatisierungsgeräte hat, vorgesehen, dass Vorkommnisse auf dem Automatisierungsgerät nach vorgegebenen oder vorgebbaren Kriterien erfasst werden und dass von erfassten Vorkommnissen benötigte Ressourcen, insbesondere in einem entfernten Speicher vorgehaltene Daten, im oder auch im Speicher des Automatisierungsgeräts vorgehalten werden.

Die Unterscheidung "im oder auch im" bezieht sich dabei darauf, dass Daten als im Zusammenhang mit einem Vorkommnis benötigte Ressourcen von dem entfernten Speicher in den lokalen Speicher einerseits verschoben oder kopiert werden können. Nach dem Verschieben befinden sich die Daten nur noch im lokalen Speicher ("im"). Nach dem Kopieren befinden sich die Daten noch im entfernten Speicher und eine Kopie befindet sich im lokalen Speicher ("auch im").

Der Vorteil der Erfindung besteht darin, dass durch die Erfassung von Vorkommnissen auf dem Automatisierungsgerät erkannt wird, welche Ressourcen im Zusammenhang mit solchen Vorkommnissen benötigt werden, so dass bei späterem Auftreten solcher Vorkommnisse die jeweils benötigten Ressourcen quasi prädiktiv bereitgestellt werden können.

Die Erfassung solcher Vorkommnisse nach vorgegebenen oder vorgebbaren Kriterien gestattet einerseits, nur Vorkommnisse mit einer bestimmten Relevanz auszuwählen, und ermöglicht andererseits, Aspekte wie z. B. eine Auftretenshäufigkeit solcher Vorkommnisse zu berücksichtigen. Im praktischen Einsatz kann sich also ergeben, dass "wichtige" Vorkommnisse immer nach dem Ansatz gemäß der Erfindung behandelt werden, wobei die Qualifizierung eines Vorkommnisses als "wichtig" sich aus einer Systemkonfiguration ergeben kann (Alarme oder sonstige Ausnahmesituationen können z. B. immer wichtig sein) oder aus einer Parametrierung oder einer sonst vom jeweiligen Bediener vorgegebenen Wertigkeit.

Vorteilhaft ist vorgesehen, dass als Vorkommnisse z. B. Bedienhandlungen oder sonstige Benutzereingriffe oder -aktionen erfasst werden. Als benötigte Ressourcen werden von der Bedienhandlung betroffene, also z. B. im Zusammenhang damit beobachtete oder beeinflusste Daten aus einem entfernten Speicher in den Speicher des Automatisierungsgeräts geladen. Die für die Bedienhandlung relevanten Daten werden damit unmittelbar zur Verfügung gestellt. Wenn im Zusammenhang mit der Bedienhandlung normalerweise eine Beobachtung bestimmter Daten erfolgt, stehen diese zum Bedarfszeitpunkt zur Verfügung.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn in die Wichtigkeit auch eine Auftretenshäufigkeit einfließt, können auch Vorkommnisse, die isoliert betrachtet eher in eine Kategorie "weniger wichtig" fallen würden, wie z. B. ein Lesezugriff auf bestimmte Daten eines entfernten Speichers, in ihrer Wichtigkeit zunehmen, so dass sich auch aus solchen Konstellationen Kriterien für die Erfassung von Vorkommnissen auf dem Automatisierungsgerät entsprechend dem Ansatz der Erfindung ergeben können. Wenn die von solchen Vorkommnissen benötigten Ressourcen im jeweiligen Speicher des Automatisierungsgeräts vorgehalten werden, also lokal und nicht mehr im entfernten Speicher, auf den bisher hat zugegriffen werden müssen, um die Ressourcen zu benutzen, stehen diese unmittelbar zur Verfügung, also ohne den bisher mitunter beobachteten Zeitversatz, der aus der Dauer des Transfers solcher Ressourcen vom entfernten Speicher in den lokalen Speicher resultiert.

Ein solcher Zeitversatz war im Grunde nur dann bemerkbar, wenn zum Zeitpunkt des Auftretens des jeweiligen Vorkommnisses ein Zugriff auf die davon jeweils betroffenen Ressourcen gewünscht war und diese zunächst noch transferiert werden mussten. Nach dem Ansatz gemäß der Erfindung ist im Vorhinein bekannt, welche Ressourcen von einem bestimmten Vorkommnis betroffen sind, so dass diese unabhängig von dem Eintreten des Vorkommnisses im lokalen Speicher des Automatisierungsgeräts vorgehalten werden und dann bei tatsächlichem Eintreten des Vorkommnisses unmittelbar, also ohne den bisher beobachteten Zeitversatz, zur Verfügung stehen.

Das Automatisierungsgerät oder eine davon umfasste Funktionalität, die hier als "Learning Object Manager" bezeichnet wird, "lernt" also, welche Vorkommnisse eine besondere Bedeutung haben (Wichtigkeit), und "lernt" weiterhin, welche Ressourcen von solchen Vorkommnissen betroffen sind, so dass diese lokal zur Verfügung gehalten werden können.

Um eine Aktualität der lokal zur Verfügung gehaltenen Ressourcen zu gewährleisten, ist vorgesehen, dass diese Bestandteil eines kontinuierlichen Datenaustauschs zwischen dem Automatisierungsgerät und den jeweiligen entfernten Automatisierungsgeräten werden. Allerdings kann es auch hier Abstufungen geben, die entsprechend dem Lernfortschritt des Automatisierungsgeräts oder des Learning Object Managers beeinflussbar sind, z. B. derart, dass Ressourcen, die quasi dauerhaft aufgrund einer häufigen Verwendung durch lokale Vorkommnisse vorgehalten werden müssen, tatsächlich beim permanenten Datenaustausch zwischen den beteiligten Automatisierungsgeräten berücksichtigt werden. Bei anderen Vorkommnissen kann sich aufgrund des Lernfortschritts ergeben, dass davon betroffene Ressourcen nur selten benötigt werden, so dass diese z. B. nur mit einer bestimmten Untersetzung von dem Datenaustausch zwischen den beteiligten Automatisierungsgeräten erfasst sind, also z. B. nur bei jedem zehnten, jedem hundertsten usw. Datenaustausch. Genauso kann sich aufgrund des Lernfortschritts ergeben, dass bestimmte Ressourcen zu bestimmten Zeitpunkten benötigt werden, so dass es in diesem Falle ausreichend ist, wenn die Ressourcen kurz vor einer Wiederholung des jeweiligen Zeitpunkts bereitgestellt werden.

Die oben genannte Aufgabe wird auch mit einem Automatisierungsgerät der eingangs genannten Art gelöst, das nach dem Verfahren wie hier und im Folgenden beschrieben arbeitet und dazu Mittel zur Durchführung des Verfahrens umfasst, insbesondere den Learning Object Manager. Die Erfindung ist dabei bevorzugt in Software implementiert, so dass die Erfindung auch ein Computerprogramm mit durch einen Computer ausführbaren Programmcodeanweisungen, ein Speichermedium mit einem derartigen Computerprogramm und ein Automatisierungsgerät, in dessen Speicher als Mittel zur Durchführung des Verfahrens und seiner Ausgestaltungen ein solches Computerprogramm geladen ist, betrifft.

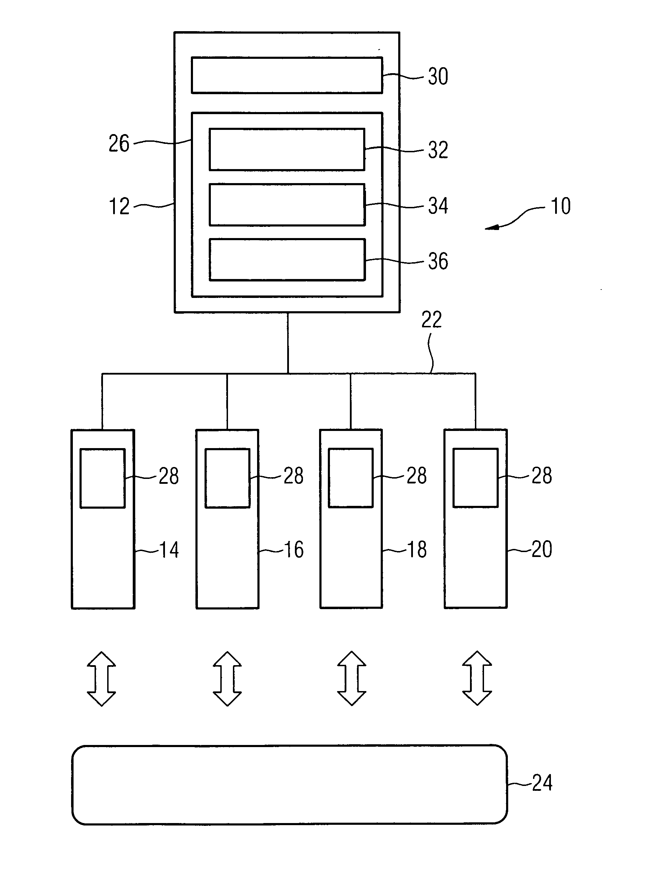

Nachfolgend wird ein Ausführungsbeispiel der Erfindung anhand der Zeichnung näher erläutert. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigt die einzige Figur ein Automatisierungssystem 10 mit einer Anzahl davon umfasster Automatisierungsgeräte 12, 14, 16, 18, 20.

Die Automatisierungsgeräte 12-20 sind kommunikativ verbunden, z. B. über einen Bus 22, und diese kommunikative Verbindung fasst die einzelnen Automatisierungsgeräte 12-20 zu dem Automatisierungssystem 10 zusammen. Das Automatisierungssystem 10 ist insgesamt zur Steuerung und/oder Überwachung eines nicht näher dargestellten technischen Prozesses 24 vorgesehen. Dazu tauschen einzelne Automatisierungsgeräte 14-20 mit dem technischen Prozess, z. B. einem industriellen Produktionsprozess, in an sich bekannter Art und Weise Daten aus, z. B. indem Messwerte aus dem Prozess 24 ausgelesen oder Steuersignale, z. B. zum Starten eines Motors, zum Schließen eines Ventils usw., an den Prozess 24 ausgegeben werden.

Bei den von dem Automatisierungssystem 10 umfassten Automatisierungsgeräten 12-20 kann es sich um Geräte unterschiedlicher Konfiguration handeln. Dargestellt ist z. B. eine Situation, bei der das Automatisierungssystem 10 als Automatisierungsgerät 12 eine speicherprogrammierbare Steuerung und als weitere Automatisierungsgeräte 14-20 so genannte Feldgeräte oder dezentrale Peripheriegeräte umfasst. Andere Konstellationen oder Konfigurationen sind ohne weiteres denkbar und für die Erfindung kommt es lediglich auf die kommunikative Verbindung zwischen einzelnen Automatisierungsgeräten 12-20 an, die z. B. anders als dargestellt auch drahtlos erfolgen kann.

Jedes Automatisierungsgerät 12-20 umfasst in an sich bekannter Art einen Speicher, wobei zur Unterscheidung im Folgenden einer der Speicher als lokaler Speicher 26 und die Speicher in den anderen Automatisierungsgeräten 14-20 als entfernte Speicher 28 bezeichnet werden. Jedes Automatisierungsgerät 12-20 umfasst darüber hinaus eine Verarbeitungseinheit 30 nach Art eines Prozessors, ASICs oder dergleichen (nur für eines der Automatisierungsgeräte 12 dargestellt). Mit seiner Verarbeitungseinheit 30 führt jedes Automatisierungsgerät 12-20 ein in dessen Speicher 26, 28 vorgehaltenes Steuerungsprogramm 32 aus, mit dem Art und Umfang der Steuerung und/oder Überwachung des technischen Prozesses 24 festgelegt sind. Jedes Steuerungsprogramm 32 bearbeitet und erzeugt dabei Daten 34, die in dem jeweiligen Speicher 26, 28 vorgehalten werden.

Das an zentraler Stelle dargestellte Automatisierungsgerät 12 wird nachfolgend als Automatisierungsgerät 12, zentrales Automatisierungsgerät 12 oder lokales Automatisierungsgerät 12 bezeichnet. Die anderen von dem Automatisierungssystem 10 umfassten Automatisierungsgeräte 14-20 werden zur Unterscheidung als entfernte Automatisierungsgeräte 14-20 bezeichnet. Wenn nun für das zentrale Automatisierungsgerät 12 Daten 34 aus einem entfernten Speicher 28 benötigt werden, mussten solche Daten 34 bisher im Anforderungszeitpunkt über den Bus 22 oder die jeweilige kommunikative Verbindung zum Automatisierungsgerät 12, nämlich in dessen lokalen Speicher 26, transferiert werden. Ein solcher Transfer benötigt eine endliche Zeit und ein damit einhergehender Zeitversatz kann mitunter als nachteilig empfunden werden. Zur Vermeidung eines solchen Zeitversatzes ist vorgesehen, dass das Automatisierungsgerät 12 Mittel umfasst, mit dem oder mit denen Vorkommnisse auf dem Automatisierungsgerät 12 nach vorgegebenen oder vorgebbaren Kriterien erfasst werden und mit dem von erfassten Vorkommnissen benötigte Ressourcen, insbesondere in einem entfernten Speicher 28 vorgehaltene Daten 34, im lokalen Speicher 26 des Automatisierungsgeräts 12 verfügbar gemacht werden. Eine Möglichkeit zur Implementierung solcher Mittel ist eine Softwarefunktionalität. Diese wird im Folgenden als "Learning Object Manager" oder kurz als "Objektmanager" 36 bezeichnet. Ein solcher Objektmanager 36 kann im Speicher 26, 28 eines jeden von einem Automatisierungssystem 10 umfassten Automatisierungsgeräts 12-20 vorgehalten werden und es kann auch vorgesehen sein, dass in einem Automatisierungssystem 10 mehrere Automatisierungsgeräte 12-20 existieren, die jeweils einen solchen Objektmanager 36 umfassen. Die Bezeichnung der jeweils involvierten Geräte und Speicher als lokale Geräte und lokale Speicher richtet sich dann nach der jeweiligen Position des Objektmanagers 36 oder bei mehreren Objektmanagern 36 nach der Position des jeweils aktiven Objektmanagers 36.

Der Objektmanager 36 kann Vorkommnisse auf dem jeweiligen Automatisierungsgerät 12-20 erfassen, und zwar nach vorgegebenen oder vorgebbaren Kriterien. Als Vorkommnisse kommen z. B. Alarme oder sonstige Ausnahmesituationen in Betracht, die im Automatisierungssystem 10 auftreten (können). Ansonsten sind als Vorkommnisse auch Bedienhandlungen zu verstehen, wie auch z. B. die Verwendung von Daten 34 durch das Steuerungsprogramm 32. Der Objektmanager 36 erfasst weiterhin von derartigen Vorkommnissen benötigte Ressourcen, also insbesondere Daten 34 und für diese deren Speicherort, und gewährleistet, dass solche Ressourcen im lokalen Speicher 26 des jeweiligen Automatisierungsgeräts 12-20 vorgehalten werden. Das Vorhalten jeweils benötigter Ressourcen im lokalen Speicher 26 des jeweiligen Automatisierungsgeräts 12-20 vermeidet einen bisher sich ergebenden Zeitversatz, wenn von solchen Vorkommnissen benötigte Ressourcen aus einem entfernten Speicher 28 abgerufen werden mussten. Die jeweiligen Ressourcen, speziell wenn es sich um Daten 34 handelt, stehen also zeitnah zur Verfügung.

Das Erfassen von Vorkommnissen auf dem jeweiligen Automatisierungsgerät 12-20, für die davon jeweils benötigte Ressourcen lokal bereitgestellt werden sollen, kann durch den Objektmanager 36 in unterschiedlichen Stufen erfolgen. Es kann z. B. vorgesehen sein, dass zu erfassende Vorkommnisse durch eine Projektierung vorgegeben werden. Auf diese Art und Weise kann z. B. festgelegt werden, dass auftretende Alarme oder dergleichen in jedem Fall als Vorkommnis zu betrachten sind. Genauso kann vorgesehen sein, dass eine wiederholte Verwendung bestimmter Ressourcen als Vorkommnis ausgewertet wird, wobei die als Schwellwert jeweils zu betrachtende Anzahl solcher Wiederholungen projektierbar ist. Andere Kriterien sind ohne Abweichung vom zentralen Aspekt der Erfindung jederzeit möglich.

Günstig ist insoweit z. B., dass als Vorkommnis auftretende Alarme erfasst und als benötigte Ressourcen von dem Alarm verwendete oder im Zusammenhang mit dem Auftreten des Alarms beobachtete (z. B. durch Bedienpersonal beobachtete) oder beeinflusste Daten aus dem oder einem der entfernten Speicher 28 in den lokalen Speicher 26 geladen werden. In einem anderen Szenario werden als Vorkommnis Bedienhandlungen und als benötigte Ressourcen von der Bedienhandlung betroffene, also im Zusammenhang mit dieser beobachtete oder beeinflusste Daten erfasst. Als Bedienhandlung kommt dabei z. B. eine Auswahl einzelner Elemente einer Prozessvisualisierung in Betracht. Des Weiteren ist möglich, dass z. B. ein Zusammenhang einer Auswahl einzelner Elemente einer Prozessvisualisierung mit auftretenden Alarmen oder dergleichen erfasst wird. Es hat sich nämlich gezeigt, dass im Falle einer Ausnahmesituation, wie dies ein auftretender Alarm darstellt, das Bedienpersonal häufig gleiche Bedienhandlungen vornimmt, so dass im Grunde zum Zeitpunkt des Auftretens des Alarms bereits feststeht, welche Ressourcen in absehbarer Zeit benötigt werden. In einem solchen Szenario können also mit dem Objektmanager 36, wenn dieser aufgrund seiner Funktionalität einen Zusammenhang einer Auswahl einzelner Elemente einer Prozessvisualisierung mit auftretenden Alarmen erkennt, bei Auftreten des Alarms als dafür benötigte Ressourcen die jeweiligen Elemente der Prozessvisualisierung oder damit im Zusammenhang stehende Daten 34 aus einem der externen Speicher 28 in den lokalen Speicher 26 geladen werden. Ganz ähnlich ist auch möglich, dass mit dem Objektmanager 36 ein Zusammenhang einer Bedienhandlung mit einem Fortschritt bei der Steuerung des technischen Prozesses 24 erfasst wird. Dann kann als Vorkommnis ein bestimmter Zustand des technischen Prozesses 24 erfasst werden und durch den Objektmanager 36 können im Zeitpunkt des Eintretens dieses Zustands als dafür benötigte Ressourcen diejenigen Daten 34 aus entfernten Speichern 28 im lokalen Speicher 26 bereitgestellt werden, die mit der im Zusammenhang mit dem Prozesszustand bisher beobachteten Bedienhandlung abgerufen werden. Weiter ist möglich, dass als Vorkommnisse Lesezyklen des Automatisierungsgeräts 12-20 aufgrund des Steuerungsprogramms 32 erfasst und als benötigte Ressourcen von dem Lesezyklus betroffene Daten aus einem oder mehreren entfernten Speichern 28 in den lokalen Speicher 26 des Automatisierungsgeräts 12-20 geladen werden. Auf diesem Wege werden quasi entfernte Daten bereits aus den entfernten Speichern 28 abgeholt, bevor sie tatsächlich benötigt werden, und stehen damit zu dem Zeitpunkt, zu dem sie benötigt werden, ohne Zeitversatz zur Verfügung.

Ein weiteres Szenario ist, dass als Vorkommnisse Ausnahmesituationen, z. B. Messwertüberschreitungen oder dergleichen, im technischen Prozess 24 erfasst und als benötigte Ressourcen von der Ausnahmesituation betroffene Daten 34 aus dem oder einem der entfernten Speicher 28 in den lokalen Speicher 26 des Automatisierungsgeräts 12-20 geladen werden.

Der Objektmanager 36 ist ein Beispiel für ein Computerprogramm mit durch einen Computer ausführbaren Programmcodeanweisungen zur Implementierung des Verfahrens wie hier beschrieben. Wenn das Automatisierungsgerät 12-20 nicht in Betrieb ist, kann der Objektmanager 36, also der diesen bildende Programmcode auf einem Speichermedium, z. B. einem optischen, magnetischen oder auch einem elektrischen Speicher, z. B. einem EPROM, einem Flash-Speicher oder dergleichen, vorgehalten werden. Ein Automatisierungsgerät 12, in dessen Speicher 26 ein Objektmanager 36 geladen ist, ist ein Beispiel für eine Vorrichtung zur Ausführung des Verfahrens wie hier beschrieben.

Damit lässt sich die Erfindung zusammenfassend kurz wie folgt darstellen: Es werden ein Verfahren zum Betrieb eines Automatisierungsgeräts und ein nach dem Verfahren arbeitendes Automatisierungsgerät mit einem Speicher 26, in dem als Automatisierungslösung zur Steuerung und/oder Überwachung eines technischen Prozesses 24 ein Steuerungsprogramm 32 gespeichert ist, angegeben, wobei das Automatisierungsgerät 12 zur Steuerung des technischen Prozesses 24 mit anderen, entfernten Automatisierungsgeräten 14-20 kommunikativ verbunden ist und wobei über die kommunikative Verbindung ein Zugriff des Automatisierungsgeräts 12 auf einen Speicher 28 entfernter Automatisierungsgeräte 14-20 möglich ist, wobei Vorkommnisse auf dem Automatisierungsgerät 12 nach vorgegebenen oder vorgebbaren Kriterien erfasst werden und wobei von erfassten Vorkommnissen benötigte Ressourcen, insbesondere in einem entfernten Speicher 28 vorgehaltene Daten 34, im Speicher 26 des Automatisierungsgeräts 12-20 vorgehalten werden.

## Patentansprüche

1. Verfahren zum Betrieb eines Automatisierungsgeräts (12) mit einem Speicher (26), in dem als Automatisierungslösung zur Steuerung und/oder Überwachung eines technischen Prozesses (24) ein Steuerungsprogramm (32) gespeichert ist,
wobei das Automatisierungsgerät (12) zur Steuerung des technischen Prozesses (24) mit anderen, entfernten Automatisierungsgeräten (14-20) kommunikativ verbunden ist und wobei über die kommunikative Verbindung ein Zugriff des Automatisierungsgeräts (12) auf einen jeweiligen Speicher - entfernter Speicher (28) - entfernter Automatisierungsgeräte (14-20) möglich ist,
**dadurch gekennzeichnet,**
**dass** Vorkommnisse auf dem Automatisierungsgerät (12-20) nach vorgegebenen oder vorgebbaren Kriterien erfasst werden und dass von erfassten Vorkommnissen benötigte Ressourcen, insbesondere in einem entfernten Speicher (28) vorgehaltene Daten (34), im Speicher des Automatisierungsgeräts (12-20) vorgehalten werden.

2. Verfahren nach Anspruch 1,
wobei als Vorkommnisse auftretende Alarme erfasst und als benötigte Ressourcen von dem Alarm verwendete oder im Zusammenhang mit dem Auftreten des Alarms beobachtete Daten (34) aus einem entfernten Speicher (28) in den Speicher (26) des Automatisierungsgeräts (12-20) geladen werden.

3. Verfahren nach Anspruch 1,
wobei als Vorkommnisse Bedienhandlungen erfasst und als benötigte Ressourcen von der Bedienhandlung betroffene Daten (34) aus einem entfernten Speicher (28) in den Speicher (26) des Automatisierungsgeräts (12-20) geladen werden.

4. Verfahren nach Anspruch 3,
wobei als Bedienhandlungen eine Auswahl einzelner Elemente einer Prozessvisualisierung erfasst wird.

5. Verfahren nach Anspruch 4 und Anspruch 2,
wobei ein Zusammenhang einer Auswahl einzelner Elemente der Prozessvisualisierung mit aufgetretenen Alarmen erfasst wird.

6. Verfahren nach Anspruch 3, 4 oder 5,
wobei ein Zusammenhang einer Bedienhandlung mit einem Fortschritt bei der Steuerung des technischen Prozesses (24) erfasst wird.

7. Verfahren nach Anspruch 1,
wobei als Vorkommnisse Lesezyklen des Automatisierungsgeräts (12-20) aufgrund dessen Steuerungsprogramm (32) erfasst und als benötigte Ressourcen von dem Lesezyklus betroffene Daten (34) aus einem entfernten Speicher (28) in den Speicher (26) des Automatisierungsgeräts (12-20) geladen werden.

8. Verfahren nach Anspruch 1,
wobei als Vorkommnisse Ausnahmesituationen im technischen Prozess (24) erfasst und als benötigte Ressourcen von der Ausnahmesituation betroffene Daten (34) aus einem entfernten Speicher (28) in den Speicher (26) des Automatisierungsgeräts (12-20) geladen werden.

9. Automatisierungsgerät mit einem Speicher (26), in dem als Automatisierungslösung zur Steuerung und/oder Überwachung eines technischen Prozesses (24) ein Steuerungsprogramm (32) hinterlegbar ist,
wobei das Automatisierungsgerät (12) zur Steuerung des technischen Prozesses (24) mit anderen, entfernten Automatisierungsgeräten (14-20) kommunikativ verbindbar ist und wobei die kommunikative Verbindung im Betrieb einen Zugriff des Automatisierungsgeräts (12) auf einen jeweiligen Speicher - entfernter Speicher (28) - entfernter Automatisierungsgeräte (14-20) erlaubt,
**gekennzeichnet durch**
Mittel zur Durchführung des Verfahrens nach einem der Ansprüche 1 bis 8.

10. Computerprogramm mit durch einen Computer ausführbaren Programmcodeanweisungen zur Implementierung des Verfahrens nach einem der Ansprüche 1 bis 8, wenn das Computerprogramm auf einem Computer, insbesondere einem Automatisierungsgerät nach Anspruch 9, ausgeführt wird.

11. Speichermedium mit einem durch einen Computer ausführbaren Computerprogramm gemäß Anspruch 10.

12. Automatisierungsgerät nach Anspruch 9, in dessen Speicher (26) als Mittel zur Durchführung des Verfahrens nach einem der Ansprüche 1 bis 8 ein Computerprogramm nach Anspruch 10 geladen ist.
